# EUROPEAN PATENT APPLICATION

(11) **EP 1 160 701 A1**
(43) Date of publication of application: **05.12.2001**
(21) Application number: 01110004.7
(22) Date of filing: 25.04.2001
(51) Int. Cl.: G06F 17/60

(54) **Schedule management system and schedule managing method**

(30) Priority: 26.04.2000 JP 2000126628
(71) Applicant: NEC CORPORATION, Tokyo (JP)
(72) Inventor: Ikeda, Takashi, Minato-ku, Tokyo (JP)
(74) Representative: VOSSIUS & PARTNER

(57) **Abstract**

A schedule management system includes a plurality of consumer terminals each belonging to a particular consumer. The consumer inputs at least information on the consumer and schedule information on a purchase or an action planned for a preselected term to go. A management server is connected to the consumer terminals via a communication network for receiving the information from the consumer terminals. At least one database is connected to the management server for storing the information. The system allows a producer to see information on potential consumers planning to purchase a particular article. A schedule managing method and a data recording medium storing a schedule management program and capable of being read by a computer are also disclosed.

## Description

The present invention relates to a schedule management system for managing the purchase of particular articles planned by consumers via Internet or similar communication network, a schedule managing method using the system, and a data recording medium storing a schedule management program and capable of being read by a computer.

It has been customary for a producer intending to sell particular articles to conduct a consumer research for grasping the number of articles to sell and then collect potential consumers over a preselected term. This system, or advance order system, allows the producer or a retail store expected to handle the articles to determine how many consumers desire the particular articles on the date of reservation, and then determine the number of articles to produce.

Assume that some consumer orders the particular article before the expiration of the preselected term, but does not show the will to purchase it. Then, the advance order system sometimes charges the consumer for cancellation, e.g., the producer's operation beginning with the sending-in of the article. Further, the advance order system sometimes sets a discount rate based on the length of the preselected term before the date of actual sale, heightening the consumers' will to purchase the articles.

The conventional advance order system allows consumers to sufficiently study articles to purchase and then order them in advance. It follows that the consumers ordered the articles in advance are quite probable to actually purchase them. However, it is difficult for the producer to accurately grasp the number of potential consumers. Specifically, although the producer may roughly see the number of articles to be purchased on the date of advance order or similar particular time, the producer cannot easily see, after the above date, the variation of the number of the consumers planning to purchase the articles. The producer must therefore limit the number of articles to produce at the advance order stage.

Moreover, the producer conducts consumer research beforehand, but simply produces the articles in accordance with the definite number of advance orders in order to avoid an excess. Specifically, as for the production of articles after the date of advance order, the producer estimates the variation of the number of articles to be purchased and then sequentially produces the articles for the consumers who clearly showed the intention to purchase them. This, however, forces the consumers planning to purchase the articles, but not ordered in advance (potential consumers), to simply wait until the delivery of the articles.

It is therefore an object of the present invention to provide a schedule management system allowing a producer to grasp potential consumers planning to purchase particular articles, a schedule managing method using the system, and a data recording medium storing a schedule management program and capable of being read by a computer.

In accordance with the present invention, a schedule management system includes a plurality of consumer terminals each allowing a particular consumer to input at least consumer's own information and schedule information relating to a purchase or an action planned for a preselected term. A management server is connected to the consumer terminals via a communication network for interchanging the information. At least one database is connected to the management server for storing the information.

Also, in accordance with the present invention, a schedule managing method uses a first implement including a management server connected to a plurality of consumer terminals via a communication network and at least one database connected to the management server to be reference by the management server. The first implement sends at least information on consumers and information on consumers' purchases or actions planned for a preselected term. A second implement stores the information in the database. A third implement obtaining the information stored in the database. The schedule managing method obtains information on potential consumers as to a particular article.

Further, in accordance with the present invention, in a data recording medium storing a schedule management program and capable of being read by a computer includes a first implement including a management server connected to a plurality of consumer terminals via a communication network and at least one database connected to the management server to be reference by the management server. The first implement sends at least information on consumers and information on consumers' purchases or actions planned for a preselected term. A second implement stores the information in the database. A third implement obtaining the information stored in the database. The schedule managing method obtains information on potential consumers as to a particular article.

The above and other objects, features and advantages of the present invention will become more apparent from the following detailed description taken with the accompanying drawings in which:
FIG. 1 is a schematic block diagram showing a schedule management system embodying the present invention;
FIG. 2 is a flowchart demonstrating a specific procedure unique to the illustrative embodiment and to be executed by a consumer;
FIG. 3 is a flowchart demonstrating a specific procedure unique to the illustrative embodiment and to be executed by a management server;
FIG. 4 is a flowchart demonstrating a specific procedure unique to the illustrative embodiment and to be executed by a retail store; and
FIG. 5 is a flowchart demonstrating a specific procedure unique to the illustrative embodiment and to be executed by a producer.

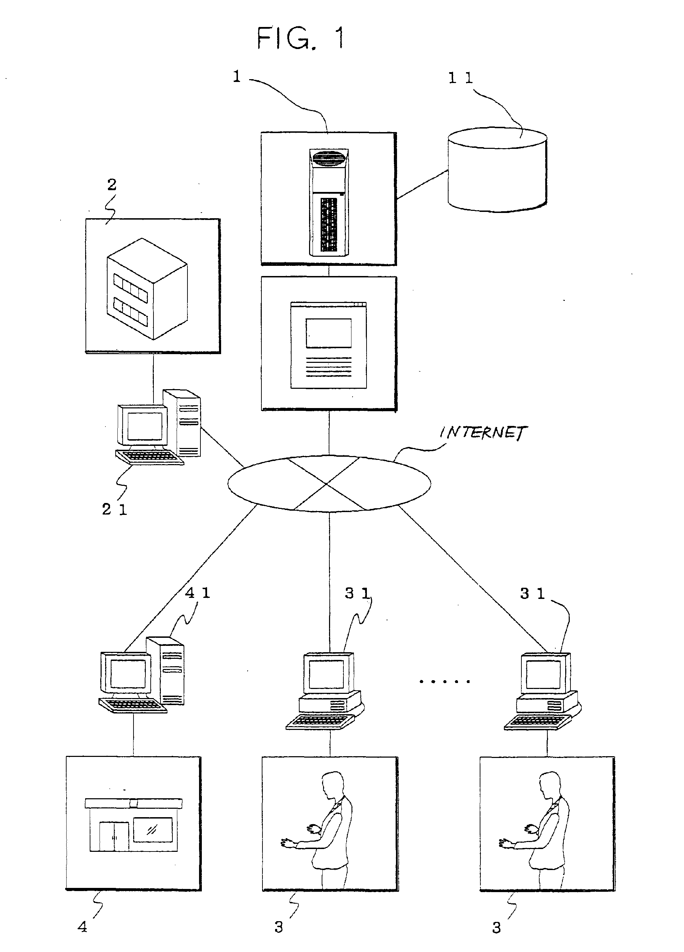

Referring to FIG. 1 of the drawings, a schedule management system embodying the present invention is shown. As shown, the schedule management system includes a plurality of consumer terminals 31 each being owned by a particular consumer 3, a producer terminal 21 belonging to a producer 2, and a management server 1 including at least one data base 11. The consumer terminals 31, producer terminal 21 and management server 1 are interconnected via Internet or similar communication network. Further, a retailer terminal 41 situated at a retail store 4 is connected to Internet. If desired, the management server 1 may be implemented as a Web (World Wide Web) server having a particular application. While only one producer terminal 2 is shown in FIG. 1, a plurality of producer terminals are, in practice, connected to Internet. This is also true with the retail store 4.

The data base 11 stores personal information and schedule information particular to each consumer 3 registered at the management server 1. The management server 1 classifies and customizes such information consumer by consumer, age by age and residence area by residence area. A homepage is built in the management server 1 and freely accessible via Internet. The homepage includes a menu picture in which the consumers 3 can input personal information and schedules, as desired. Further, the homepage lists articles that the producer 2 is planning to produce. The producer 2 is capable of communicating with the management server 1 in order to input articles to be newly produced and presented, i.e., to update the list of articles on the homepage.

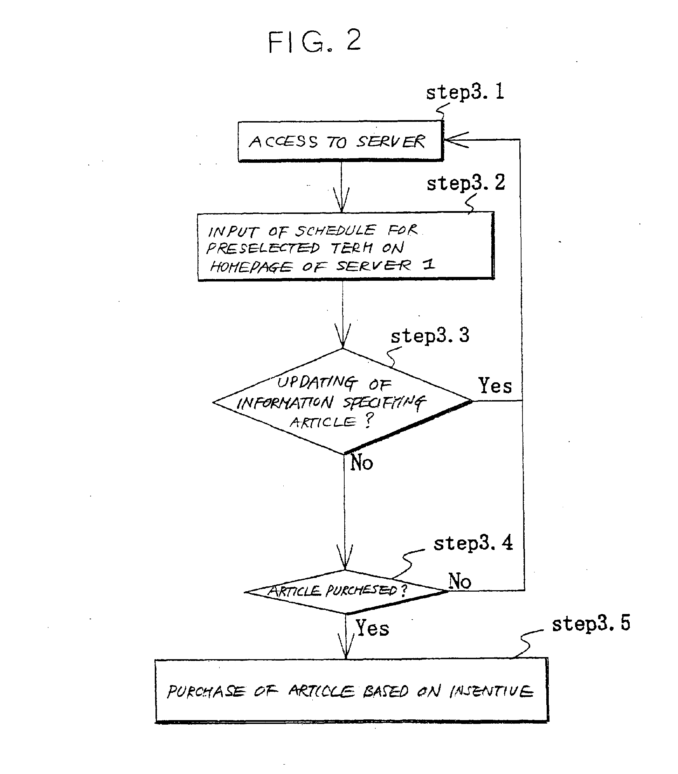

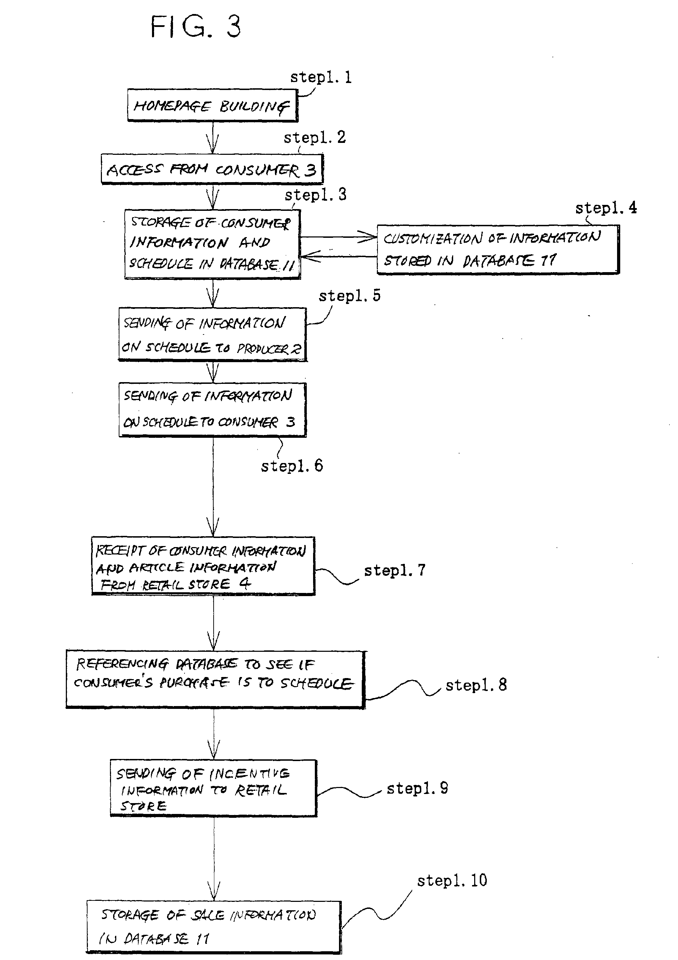

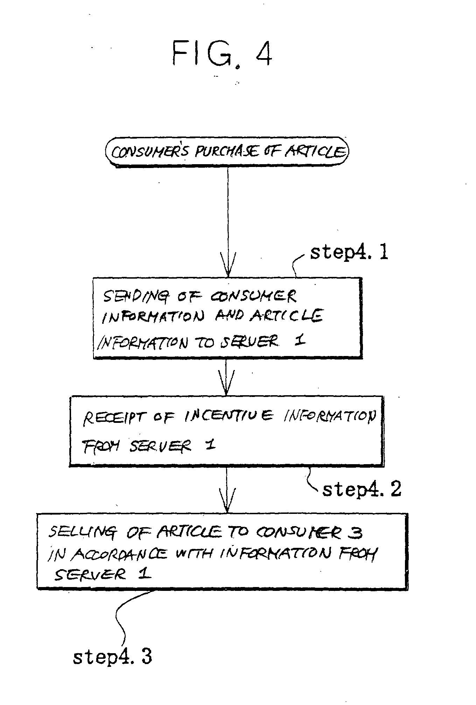

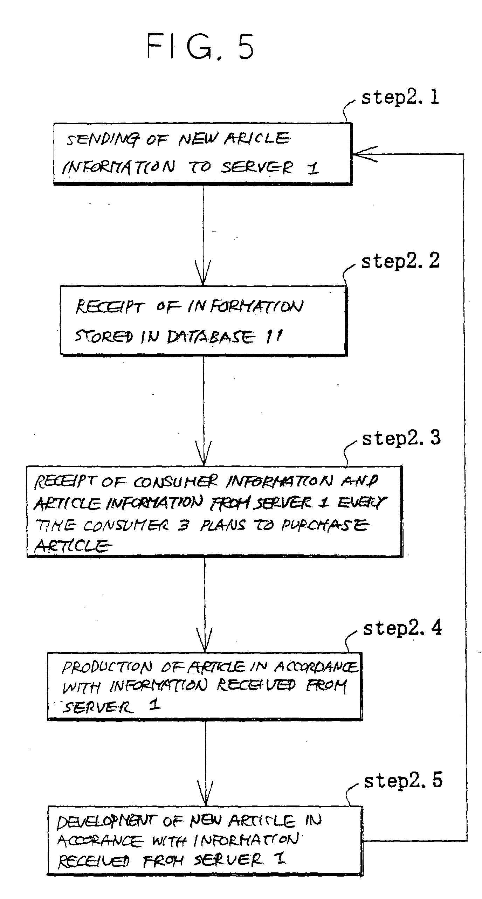

Reference will be made to FIGS. 2 through 5 for describing a schedule managing method unique to the illustrative embodiment and using a data recording medium that stores a schedule management program and can be read by a computer. FIGS. 2 and 3 demonstrate procedures to be executed by any one of the consumers 3 and the management server 1, respectively. FIGS. 4 and 5 demonstrate procedures to be executed by the retail store 4 and the producer 2, respectively.

First, as shown in FIG. 2, the consumer 3 accesses the homepage of the management server 1 via the consumer terminal 31 and Internet (step 3.1). The homepage lists information on articles to be produced by the producer 2 and includes a column that allows each consumer 3 to input a schedule for a preselected term. After the step S3.1, the consumer 3 performs preselected operation including authentication and then inputs information on a purchase schedule for the preselected term, e.g., for a month after the access to the homepage on a schedule input page, which is included in the homepage (step 3.2).

Subsequently, the consumer 3 determines whether or not to update the information on the purchase schedule for the preselected term (step 3.3). The step 3.3 should preferably be executed a plurality of times on the basis of the information. For example, assume that the consumer 3 has a vague idea of purchasing a TV (television) receiver. Then, the consumer 3. first inputs the intention to purchase a TV receiver on a certain date as a first schedule input. When the consumer 3 input the first schedule input determines the kind, producer, price or similar factor that specifies a TV receiver later, the consumer 3 sequentially inputs such detailed information on the TV receiver on the schedule input page as a second schedule input, a third schedule input and so forth.

For example, in the step 3.3, assume that the consumer 3 inputs the intention to purchase a "TV receiver" on a certain date at a certain retail store on the schedule input page of the homepage as a first schedule input. The consumer may then replace the "TV receiver" with a "20 inch, LCD (Liquid Crystal Display" TV receiver" as a second schedule input later. Thereafter, the consumer 3 may further replace the "20 inch, LCD TV receiver" with a "20 inch, LCD display with a certain type number to be produced by a certain producer" as a third schedule input.

The management server 1 may send to the consumer terminal 31 the information input on the schedule input page by the consumer 3 and an incentive calculated on the basis of the input schedule, so that the consumer 3 can confirm such information. The incentive will be described in detail later.

The schedule input page of the homepage should preferably allow the consumer 3 to input not only an article or similar material item but also a travel not needing the previous purchase of tickets or similar immaterial item. This allows the producer 2, dealing with an item that the consumer 3 is planning to purchase, to conduct sales promotion for making inquiries on the basis of the consumer's plan. More specifically, the producer 23 can promote sales operation not only with items desired by the consumers 3 but also with other items.

If the consumer 3 desires to further update the information on the article to purchase (Yes, step 3.3), the procedure returns to the step 3.1. If otherwise (No, step 3.3), whether or not the consumer 3 has started action for purchasing the desired article at the desired retail store 4 is determined (step 3.4). If the answer of the step 3.4 is No, the procedure returns to the step 3.1. If the answer of the step 3.4 is Yes, then the retail store 4 sends information on the consumer's action to the management server 1. The information on the consumer's action includes the name of the consumer 3, the article to be purchased, and the date of purchase. The retail store 4 at which the consumer 3 is purchasing the article is identified on the basis of authentication means established between the management server 1 and the retail store 4 beforehand.

Subsequently, the consumer 3 purchases the article on the basis of an incentive set by the management server 1 beforehand (step 3.5). The incentive refers to, e.g., a discount rate. A discount rate, for example, is determined on the basis of when and how the consumer 3 planned to purchase an article. Specifically, the earlier the time when the consumer 3 planned to purchase an article, i.e., when the consumer 3 inputted the intention to purchase an article on the homepage, the higher the discount rate.

The procedure to be executed by the management server 1 will be described with reference to FIG. 3. As shown, the management server 1 builds the homepage listing the article information of the producer 2 on Internet. The homepage additionally includes columns each being assigned to a particular consumer 3 and allowing the consumer 3 to input a schedule for a preselected term (step 1.1). Subsequently, any one of the consumers 3 accesses the homepage (step 1.2). If the consumer 3 intending to use the homepage is not registered at the management server 1, then the consumer 3 sends personal information to the management server 1 via the consumer terminal 31. The management server 1 registers the consumer 3 by storing the personal information in the database 11 (step 1.3).

The personal information to be stored in the database include the name, date of birth, sex and so forth that identify the consumer 3. To facilitate the handling of such personal information, the management server 1 may issue a particular ID (identification) number or a particular IC (Integrated Circuit) card to each consumer 3. Further, a PKI (Public Key Infrastructure) may be combined with the personal information.

After the step 1.3, the management server 1 stores information input by the consumer 3 at least once in the database 11 while classifying the information by attribute (step 1.4). In this condition, the information stored in the database 11 is ready to be referenced by the producer 2. Attributes may include the taste or interest of the individual consumer 3 in addition to the personal information and schedule.

Subsequently, the management server 1 sends, among the information classified by attribute, the information on the consumer 3 planning to purchase an article available from the producer 2 to the producer 2 (step 1.5). In addition, the management server 1 should preferably send to the consumer 3 the information representative of the inputted schedule for a confirmation purpose and information representative of a calculated incentive (step 1.6).

While the database 11 stores the personal information and schedule information of the individual consumer 3, the information to be referenced at the management server 1 is so formatted as to protect the information from leakage. Specifically, the management server 1 is capable of classifying the personal information and schedule information by consumer, age and residence area to thereby customize the information. The producer 2 should preferably reference the so classified information via the producer terminal 21.

When the consumer 3 starts action for purchasing the desired article at the retail store 4, the retail store 4 sends information on the consumer's action to the management server 1 (step 1.7). The management server 1 compares the received information with the information stored in the database 11 in order to determine whether or not the consumer 3 has acted to schedule (step 1.8). If the consumer 3 has acted to schedule, the management server 1 sends the result of decision to the retail store 4 (step 1.9). The result of decision includes an incentive, e.g., the discount rate of the article set by the previously stated specific scheme. Alternatively, the management server 1 may only acknowledge the information sent from the retail store 4 and then give the consumer 3 purchased the article a coupon or a point, which can be changed into an article, later as an incentive.

Further, the management server 1 writes information on the sale of the article conducted at the retail store 4 in the database 11, so that the producer 2 may use it for sales promotion later (step 1.10).

The procedure to be executed by the retail store 4 will be described with reference to FIG. 4. As shown, when the consumer 3 starts action for purchasing the article at the retail store 4, the retail store 4 sends the information on the consumer's action to the management server 1 (step 4.1), as stated earlier. At this instant, the retail store 4 may send its own ID number to the management server 1 for an authentication purpose. The ID number, like the ID number assigned to the consumer 3 by the management server 1, is set between the server 1 and the retail store 4 beforehand. The retail store 4 receives from the management server 1 information on, e.g., an incentive derived from the information sent to the server 1, thereby confirming the consumer's action (step 4.2). Thereafter, the retail store 4 sells the article to the consumer 3 by taking account of the incentive (step 4.3).

FIG. 5 shows the procedure to be executed by the producer 2. As shown, the producer 2 inputs information on a new article on the homepage of the management server 1 (step 2. 1). The producer 2 then receives the various information stored in the database 11 from the management server 1 (step 2.2). Subsequently, every time the consumer 3 inputs the particular article available from the particular producer 2 on the homepage, the producer 2 receives information at least on the number of articles ordered from the management server 1 (step 2.3). The producer 2 then produces an adequate number of articles in accordance with the information received from the management server 1 (step 2.5). In addition, the producer 2 plans the development of a new article on the basis of the information received from the management server 1 (step 2.5).

The procedures described above with reference to FIGS. 2 through 5 may be summarized as follows. The consumer 3 inputs the details of an article to purchase on the schedule input page of the home page in the form of a plurality of consecutive schedule inputs. At this instant, the management server 1 sends information at least on the number of articles ordered to the producer 2. The producer can reference the information stored in the database 11 and classified by attribute. In this manner, the illustrative embodiment allows the consumer 3 to input a schedule even before determining the details of a desired article and then input the details of the article on a date close to a preselected time, e.g., a planned date of purchase.

The management server 1 sends information on the consumer 3 to the producer 2 on the basis of the desired article and sends to the consumer 3 the information for confirmation together with a calculated incentive.

When the consumer 3 starts action for purchasing the article at the retail store 4, the retail store 4 sends the name of the consumer 3, article purchased, date of purchase and so forth to the management server 1. The management server 1 can identify the retail store 4 with the authenticating means established between the server 1 and the retail store 4. The retail store 4 sends information including its own authentication to the management server 1.

If the consumer 3 has acted according to the schedule stored in the database 11, then the management server 1 sends information representative of an incentive to the retail store 4. Thereafter, the consumer 3 purchases the article with the incentive. The management server 1 writes information on the sale of the article in the database 11, so that the producer 2 may reference it for sales promotion later.

If desired, the management server 1 and database 11 may be directly connected to the producer terminal 21. That is, the management server 1 may be situated at the producer's station, in which case the producer 2 will directly interchange data with the consumers 3 and retail store 4. This allows the producer 2 to easily manage information on the individual consumer 3 and to set a discount rate or similar incentive consumer by consumer.

The illustrative embodiment shown and described has various unprecedented advantages, as enumerated below.
(1) The management server 1 stores the schedule of the individual consumer 3 in the database 11. The producer 2 can therefore estimate, e.g., the number of potential consumers 3 intending to purchase a particular article before actually producing and selling the article.
(2) By sending a purchase schedule to the management server 1, the consumer 3 can surely obtain a desired article without wasting time.
(3) The producer 2 can produce an adequate number of articles in accordance with information on the consumers 3 and the schedules of the consumers 3. In addition, the producer 2 can plan the development of a new article on the basis of information received from the management server 1.
(4) The producer 2 and retail store 4 can interchange information on a particular article via the management server 1.
(5) The individual consumer 3 is allowed to input the details of a desired article on the homepage of the management server 1 in the form of a plurality of consecutive schedule inputs. The producer 2 can therefore obtain not only information on the consumers 3 but also planned actions, thereby recognizing real time trend as to articles.
(6) The retail store 4 sends to the management server 1 information on the consumer intending to purchase a particular article and information on the article purchased. Such information allows the producer 2 to see the execution of the schedule via the management server 1.
(7) The producer 2 can classify the consumers 3 intending to purchase particular articles by attribute and can therefore effectively use the stored information for the development of articles later.
(8) The producer 2 can map out a marketing strategy on the basis of the attribute, particularly residence area, of the consumers 3 stored in the database 11.
(9) The consumers 3 can purchase particular articles to schedule while the producer 2 can determine the number of articles to produce.
(10) The incentive motivates the individual consumer 3 to input a schedule at an early stage. This allows the producer 2 to estimate the number of articles to produce at an early stage and therefore to produce them without being pressed for time.
(11) The incentive not only motivates the consumers 3 to purchase articles, but also frees the producer 2 from an extra cost for, e.g., producing gifts.
(12) The producer 2 can grasp consumers' needs for articles at an early stage. When each consumer inputs the details of an article to purchase, the details are stored in the database 11 and transferred to the producer 2.
(13) The information is protected from leakage that might occur via a communication network. In addition, the producer 2 can clearly see consumers' needs in accordance with the customized information and can therefore develop articles on the basis of the information.
(14) The producer 2 can see not only articles input by the consumers 3 beforehand but also places where they purchased particular articles. The producer can then systematically determine the consumers' actions.
(15) By using a data recording medium storing a schedule management program and that can be read by a computer, the producer 2 can recognize information on the consumers 3 including the number of potential consumers 3 desiring a particular article. The producer can therefore produce and sell an adequate number of articles. Also, by sending a schedule relating to the purchase of a particular article to the management server 1, the consumer 3 can surely obtain the article without wasting time.

In summary, in accordance with the present invention, a producer can grasp the trend of consumers' needs at an early stage. When the individual producer specifies a desired article through consecutive schedule inputs, the schedule inputs are sequentially sent to a management server and then transferred to a producer in the form of an article. The present invention therefore allows the producer to grasp the trend of consumers over a long span and efficiently control the production of articles. This is contrastive to the conventional advance order system that causes a producer to produce articles on the basis of the consumers' reaction on a particular date, e.g., a advance order date. Further, the producer can produce an adequate number of articles and sell them without being pressed for time by grasping the number of potential consumers. This obviates an occurrence that the producer sequentially produces articles while causing potential consumers to wait.

Various modifications will become possible for those skilled in the art after receiving the teachings of the present disclosure without departing from the scope thereof.

## Claims

1. A schedule management system comprising:
a plurality of consumer terminals each allowing a particular consumer to input at least consumer's own information and schedule information relating to a purchase or an action planned for a preselected term;
a management server connected to said plurality of consumer terminals via a communication network for interchanging the information; and
at least one database connected to said management server for storing the information.

2. The system as claimed in claim 1, further comprising at least one producer terminal owned by a producer who indirectly provides consumers with articles, said at least one producer terminal being connected to said management server via the communication network for interchanging information.

3. The system as claimed in claim 1 or 2, further comprising at least one retailer terminal situated at a retailer store, which directly sells the article to any one of the consumers, and connected to said management server via the communication network for interchanging information.

4. The system as claimed in claim 1, 2 or 3, wherein the schedule information is input stepwise in the form of at least one schedule input.

5. The system as claimed in claim 4, wherein said retailer terminal comprises means for sending information on the consumer, whose is intending to purchase a particular article, and information on said article to said management server,
said management server comprises:
deciding means for determining whether or not the consumer has acted according to schedule on the basis of the information received from said retailer terminal; and
means for sending a result of decision output from said deciding means to said retailer terminal.

6. The system as claimed in any of claims 1 to 5, wherein said management server further comprises means for classifying the information stored in said database by attribute and sending said information classified to said retailer terminal.

7. The system as claimed in claim 6, wherein the attribute comprises personal information of the consumer, which includes at least an age, a sex and a taste, or residence area information based on said personal information.

8. The system as claimed in any of claims 1 to 7, wherein when the consumer has acted according to schedule, the producer gives a preselected incentive to said consumer schedule by schedule.

9. The system as claimed in claim 8, wherein the preselected incentive is set in accordance with a time when the consumer has input a schedule and a content of said schedule.

10. The system as claimed in claim 9, wherein the incentive comprises a discount rate of the article to be purchased by the consumer.

11. In at least one consumer terminal connected to a management server, which includes at least one database for storing information on a consumer, via a communication network, means is provided for sending at least information on said consumer and information on a consumer's purchase planned for a preselected term or a consumer's planned action.

12. The consumer terminal as claimed in claim 11 wherein the consumer sends at least one information on the consumer and at least one information on the consumer's purchase planned for a preselected term or the consumer's planned action stepwise.

13. In at least one management server connected to a consumer terminal, which sends information on a consumer, via a communication network, at least one database is provided for storing at least information on said consumer and information on a consumer's purchase planned for a preselected term or a consumer's planned action.

14. The management server as claimed in claim 13, wherein the consumer sends at least one information on the consumer and at least one information on the consumer's purchase planned for a preselected term or the consumer's planned action stepwise.

15. The management server as claimed in claim 13, wherein the information stored in said database is classified by at least one of a consumer, a residence area based on said consumer and an age of said consumer to be thereby customized.

16. The management server as claimed in claim 15, wherein the consumer sends at least one information on the consumer and at least one information on the consumer's purchase planned for a preselected term or the consumer's planned action stepwise.

17. In a retailer terminal, a consumer terminal allowing a particular consumer to input at least consumer's own information and schedule information relating to a purchase or an action planned for a preselected term and a management server including at least one database, which stores information on said consumer, are connected to said retailer terminal via a communication network.

18. The retailer terminal as claimed in claim 17, wherein the consumer sends at least one information on the consumer and at least one information on the consumer's purchase planned for a preselected term or the consumer's planned action stepwise.

19. In a schedule managing method, there are used:
first means including a management server connected to a plurality of consumer terminals via a communication network and at least one database connected to said management server to be reference by said management server, for sending at least information on consumers and information on consumers' purchases or actions planned for a preselected term;
second means for storing the information in said database; and
third means for obtaining the information stored in said database;
wherein said schedule managing method obtains information on potential consumers as to a particular article.

20. The method as claimed in claim 19, wherein said first means sends at least one information on the purchases planned on the basis of more detailed information on the article to be purchased.

21. The method as claimed in claim 20, wherein said management server is connected to at least one retailer terminal situated at a retailer store, which directly sells the article, via a communication network,
the retail store is provided with authenticating means unique to said retail store, and
the authenticating means is sent to said management server as a history of the article purchased by the consumer.

22. The method as claimed in claim 21, wherein when the consumer purchases the article planned at the retailer store, said retailer terminal sends information on said consumer and information on a consumer's action planned for a preselected term to said management server, and
said management server determines, based on the information received from said retailer terminal, whether or not the consumer has performed the action planned and sends a result of decision to said retailer terminal.

23. The method as claimed in any of claims 19 to 22, wherein said management server classifies the information stored in said database by attribute and sends said information classified to a producer terminal.

24. The method as claimed in claim 23, wherein the attribute comprises personal information of the consumer, which includes at least an age, a sex and a taste, or residence area information based on said personal information.

25. The method as claimed in any of claims 19 to 24, wherein when the consumer has performed the planned action, the producer terminal gives a preselected incentive to said consumer schedule by schedule.

26. The method as claimed in claim 25, wherein the preselected incentive is set in accordance with a time when the consumer has input a schedule and a content of said schedule.

27. The system as claimed in claim 25 or 26, wherein the incentive comprises a discount rate of the article to be purchased by the consumer.

28. In a data recording medium storing a schedule management program and capable of being read by a computer, there are provided:
first means including a management server connected to a plurality of consumer terminals via a communication network and at least one database connected to said management server to be reference by said management server, for sending at least information on consumers and information on consumers' purchases or actions planned for a preselected term;
second means for storing the information in said database; and
third means for obtaining the information stored in said database;
wherein said data recording medium obtains information on potential consumers as to a particular article.

29. The medium as claimed in claim 28,wherein said first means sends at least one information on the purchases planned on the basis of more detailed information on the article to be purchased.

30. The medium as claimed in claim 29, wherein said management server is connected to at least one retailer terminal situated at a retailer store, which directly sells the article, via a communication network,
the retail store is provided with authenticating means unique to said retail store, and
the authenticating means is sent to said management server as a history of the article purchased by the consumer.

31. The medium as claimed in claim 30, wherein when the consumer purchases the article planned at the retailer store, said retailer terminal sends information on said consumer and information on a consumer's action planned for a preselected term to said management server, and
said management server determines, based on the information received from said retailer terminal, whether or not the consumer has performed the action planned and sends a result of decision to said retailer terminal.

32. The medium as claimed in any of claims 28 to 31, wherein said management server classifies the information stored in said database by attribute and sends said information classified to a producer terminal.

33. The medium as claimed in claim 32, wherein the attribute comprises personal information of the consumer, which includes at least an age, a sex and a taste, or residence area information based on said personal information.

34. The medium as claimed in any of claims 28 to 33, wherein when the consumer has performed the planned action, the producer terminal gives a preselected incentive to said consumer schedule by schedule.

35. The medium as claimed in claim 34, wherein the preselected incentive is set in accordance with a time when the consumer has input a schedule and a content of said schedule.

36. The medium as claimed in claim 35, wherein the incentive comprises a discount rate of the article to be purchased by the consumer.
